# EUROPÄISCHE PATENTSCHRIFT

(11) **EP 1 260 394 B1**
(45) Veröffentlichungstag und Bekanntmachung des Hinweises auf die Patenterteilung: **14.06.2006**
(21) Anmeldenummer: 02009917.2
(22) Anmeldetag: 03.05.2002
(51) Int. Cl.: B60J 7/14, B60J 7/12

(54) **Cabriolet-Fahrzeug mit zumindest einem flexiblen Dachbereich**
Convertible vehicle with at least one flexible roof part
Véhicule convertible avec un toit ayant au moins une région flexible

(30) Priorität: 12.05.2001 DE 10123228
(43) Veröffentlichungstag der Anmeldung: 27.11.2002
(73) Patentinhaber: Wilhelm Karmann GmbH, 49084 Osnabrück (DE)
(72) Erfinder: Bunsmann, Winfried, 49143 Bissendorf (DE); Russke, Klaus, 49143 Bissendorf (DE); Steuernagel, Jörg, 49134 Wallenhorst (DE); Exner, Markus, 49191 Belm (DE); Dziubiel, Marian, 49074 Osnabrück (DE); Oberhoff, Thomas, 49186 Bad Iburg (DE); Aydt, Matthias, 71735 Eberdingen (DE)

(56) Entgegenhaltungen:
- DE-A- 3 825 790
- DE-A- 19 704 846
- DE-C- 4 124 813
- US-A- 4 708 389
- US-A- 5 207 474
- US-A- 5 833 300

## Beschreibung

Die Erfindung betrifft ein Cabriolet-Fahrzeug nach dem Oberbegriff des Anspruchs 1, wie z.B aus DE-A-3825 790 bekannt ist.

Um einen flexiblen Dachbereich bzw. ein vollständig flexibles Dach eines solchen Fahrzeugs abzustützen, ist es bekannt, den Dachbezug des flexiblen Dachbereichs, beispielsweise einen textilen Bezug, über fahrzeugrandseitige Rahmenabstützungen, die das Dach gegenüber den seitlichen Fenstern begrenzen, und zwischen diesen Rahmenabstützungen erstreckte Querspriegel zu spannen. Dadurch ist in der Seitenansicht des Fahrzeugs bei geschlossenem Dach, insbesondere wenn dieses sich im Lauf der Zeit dehnt, eine gewisse Abstufung in der Dachlinie sichtbar. Diese ist nicht als durchgehende Kurve zu sehen, sondern durch einen Polygonzug angenähert, was den optischen Eindruck des Cabriolet-Fahrzeugs bei geschlossenem Dach beeinträchtigt.

Der Erfindung liegt das Problem zugrunde, die Dachlinie des Cabriolet-Fahrzeuges bei geschlossenem Dach zu verbessern.

Die Erfindung löst dieses Problem durch ein Cabriolet-Fahrzeug mit den Merkmalen des Anspruchs 1. Vorteilhafte Ausgestaltungen ergeben sich aus den Unteransprüchen 2 bis 9.

Mit der erfindungsgemäßen Ausbildung von in Fahrzeuglängsrichtung verlaufenden Trägern zwischen den randseitigen Rahmenabstützungen sind durchgehende Querspriegel entbehrlich. Die Seitenlinie des Dachverlaufes kann daher ohne Abstufungen ausgebildet werden. Dabei ist es möglich, daß Längsträger durch Querträger miteinander verbunden sind. Durch die Abstützung der Querträger an den Längsträgern tritt jedoch auch dann keine sichtbare Abstufung in dem Dachbezug auf.

Um eine einfache Faltbarkeit des über Längsträger abgestützten Daches oder Dachbereiches sicherzustellen, weisen die Träger vorteilhaft jeweils zumindest ein Gelenk auf, um dessen Gelenkachse sowohl der Träger als auch der darüber gespannte Dachbezug faltbar sind. Somit können in gefalteter Stellung die an den Gelenken voneinander getrennten Teile der Träger in geöffneter Stellung des Daches raumsparend nahezu parallel zueinander angeordnet liegen. Dadurch ergibt sich in der geöffneten Stellung ein in Fahrzeuglängsrichtung nur kurz erstrecktes Dachpaket. Dieses gilt insbesondere, wenn der flexible Dachbereich nach Art eines Rolldaches nach hinten faltbar ist, wozu den Trägerteilen jeweils mehrere hintereinanderliegende Gelenke zugeordnet sind.

Eine geometrisch besonders günstige Ausbildung ergibt sich dann, wenn ein starres hinteres Dachteil, das die Heckscheibe umfassen kann, vorgesehen ist, wodurch sich die Längsträger dann zwischen der Oberkante dieses hinteren Dachteils und dem Windschutzscheibenrahmen in einer nahezu horizontalen Stellung erstrecken können. Der flexible Dachbereich und das starre hintere Dachteil können zur Erreichung der einheitlichen Dachlinie gemeinsam von einem einheitlichen Bezug übergriffen sein.

Weitere Vorteile und Einzelheiten ergeben sich aus einem in der Zeichnung dargestellten und nachfolgend beschriebenen Ausführungsbeispiel des Gegenstandes der Erfindung. In der Zeichnung zeigt:
- Fig. 1: eine schematische, perspektivische Ansicht eines erfindungsgemäßen Cabriolet-Fahrzeugs bei geschlossenem Dach,
- Fig. 2: eine ähnliche Ansicht wie Fig. 1 bei teilweise geöffnetem flexiblem Dachteil,
- Fig. 3: eine ähnliche Ansicht wie Fig. 2 während der weiteren Öffnung des flexiblen Dachteils,

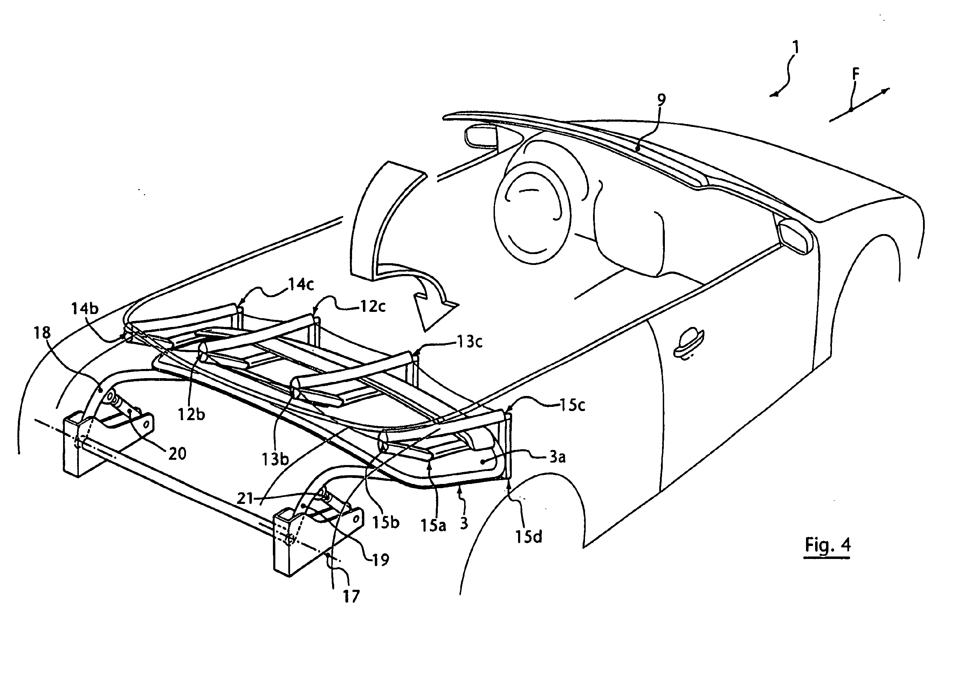

- Fig. 4: eine ähnliche Ansicht wie Fig. 3 bei vollständig geöffnetem Dach,
- Fig. 5: eine schematische Seitenansicht des Cabriolet-Fahrzeugs bei vollständig geschlossenem Dach,
- Fig. 6: eine ähnliche Ansicht wie Fig. 5 während der Öffnung des flexiblen Dachteils,
- Fig. 7: eine ähnliche Ansicht wie Fig. 6 bei vollständiger Öffnung des flexiblen Dachteils und noch geschlossener Stellung eines starren hinteren Dachteils,
- Fig. 8: eine ähnliche Ansicht wie Fig. 7 bei vollständig geöffnetem Dach,
- Fig. 9: eine Detailansicht eines Längsträgers von der Seite gesehen,
- Fig. 10: eine Draufsicht auf den Längsträger nach Fig. 9,
- Fig. 11: eine perspektivische Ansicht des Längsträgers in seinem Gelenkbereich,
- Fig. 12: eine Seitenansicht des Längsträgers bei aufgeschwenkter Stellung der Teile gegeneinander,
- Fig. 13: eine Seitenansicht der gegeneinander aufgeschwenkten Teile des Längsträgers,
- Fig. 14: einen Schnitt entlang der Linie XIV-XIV in Fig. 10,
- Fig. 15: einen Schnitt entlang der Linie XV-XV in Fig. 10,
- Fig. 16: einen Schnitt entlang der Linie XVI-XVI in Fig. 9.

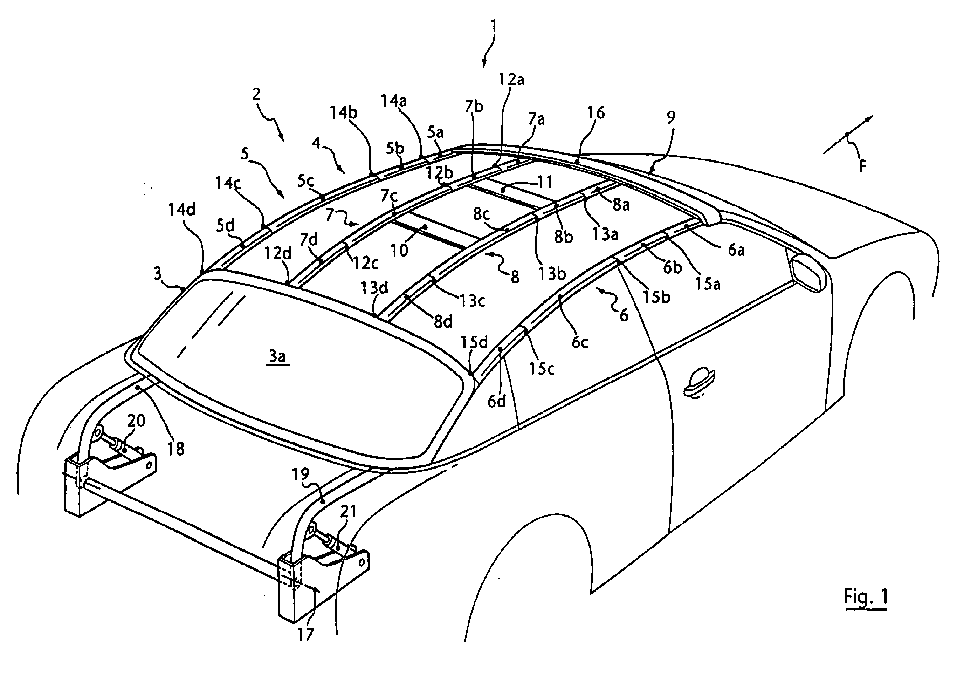

Das in Fig. 1 dargestellte Cabriolet-Fahrzeug 1 weist ein insgesamt bewegliches Dach 2 auf, das ein starres hinteres Dachteil 3 und ein daran in Fahrtrichtung F anschließendes flexibles Dachteil 4 umfaßt.

Abweichend von der gezeichneten Ausführung, kann auch das Dach 2 insgesamt flexibel ausgebildet sein. In jedem Fall kann das Dach 2 von einem einheitlichen Bezug (nicht gezeichnet) übergriffen sein, um damit eine einheitliche Optik sicherzustellen.

Im vorliegenden Ausführungsbeispiel ist das Cabrioletfahrzeug 1 mit einer rückwärtigen Sitzreihe ausgestattet, was grundsätzlich nicht zwingend ist. Ein erfindungsgemäßes Cabriolet-Fahrzeug kann auch ein Zweisitzer sein.

Der Dachbezug des flexiblen Dachbereichs 4 ist zwischen fahrzeugrandseitigen Rahmenabstützungen 5,6 und über Träger 7,8 gespannt. Erfindungsgemäß sind die Träger 7,8 in Fahrzeuglängsrichtung angeordnet und verbinden im Ausführungsbeispiel das starre hintere Dachteil 3 mit einem oberen Bereich des vorderen Windschutzscheibenrahmens 9. An Stelle der zwei in Fig. 1 gezeichneten Träger 7,8 neben den randseitigen Rahmenabstützungen 5,6 kann auch eine andere Anzahl von zusätzlichen Trägern 7,8 vorgesehen sein. Insbesondere kann auch ein längs erstreckter Träger in der vertikalen Fahrzeuglängsmittelebene liegen.

Im Ausführungsbeispiel sind Querverbinder 10,11 zwischen den Längsträgern 7,8 vorgesehen. Dieses ist allerdings nicht zwingend. Andererseits können auch derartige Querverbinder zwischen den Längsträgern 7,8 und den randseitigen Rahmenabstützungen 5,6 vorgesehen sein. Die Querträger 10,11 verlaufen dicht unterhalb der oberen Seite der Längsträger 7,8, wodurch sie sich im aufgespannten Bezug nicht abzeichnen.

Die längs verlaufenden Träger 7,8 und die randseitigen Rahmenprofile 5,6 sind über einen frontseitigen Querträger 16, der zur Anlage an den Windschutzscheibenrahmen 9 dient, miteinander verbunden.

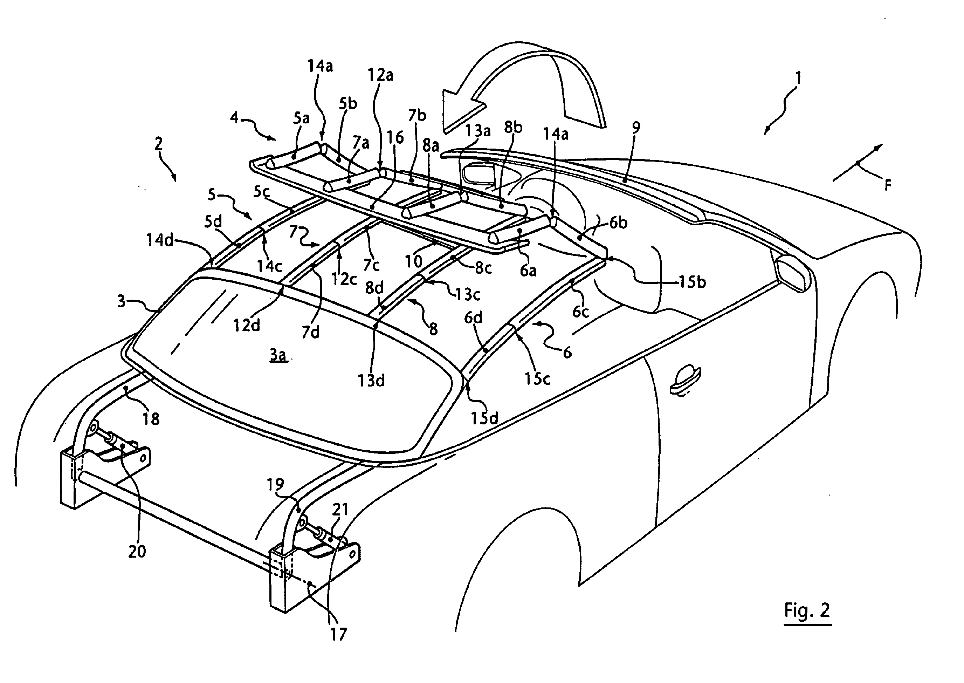

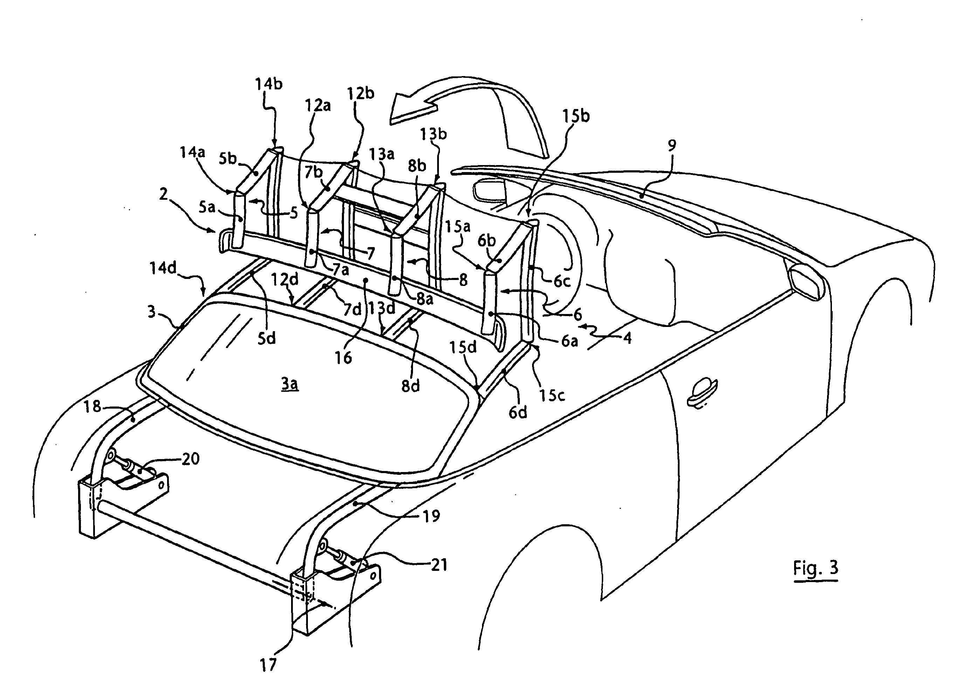

Die längs verlaufenden Träger 7,8 sind durch im Ausführungsbeispiel jeweils drei Gelenke 12a,12b,12c bzw. 13a,13b,13c in ihrem Längsverlauf in vier Abschnitte 7a,7b,7c,7d;8a,8b,8c,8d geteilt. Auch die äußeren Rahmenabstützungen 5;6 sind in entsprechender Weise jeweils mit drei Gelenken 14a,14b,14c bzw. 15a,15b,15c über ihren Längsverlauf versehen und in die entsprechenden Abschnitte 5a,5b,5c,5d;6a,6b,6c,6d geteilt. Der flexible Dachbereich ist um diese Gelenke faltbar, wie in den Fig. 2 und 3 dargestellt ist. Auch eine andere Anzahl von Gelenken ist möglich.

Die Lage der jeweils einander zugeordneten Gelenke 12a,13a,14a bzw. 12b,13b,14b,12c,13c,14c der jeweiligen Träger 7,8 bzw. Rahmenabstützungen 5,6 ist dabei so aufeinander abgestimmt, daß mit einer Faltungsbewegung jeweils alle einander zugeordneten Gelenke 12a,13a,14a,15a bzw. 12b,13b,14b,15b bzw. 12c,13c,14c,15c gleichzeitig eingefaltet werden können. Dies bedeutet nicht, daß die jeweils nebeneinanderliegenden Gelenke, beispielsweise 12a,13a,14a,15a alle auf einer gemeinsamen Querlinie im Fahrzeug liegen. Vielmehr ist die Lage der einander zugeordneten Gelenke durch die Wölbung und den Bewegungsablauf des Dachöffnens und -schließens aufeinander abgestimmt.

Das starre hintere Dachteil 3 mit der Heckscheibe 3a ist über eine karosserieseitige, quer verlaufende Horizontalschwenkachse 17 schwenkbar gehalten. Die Horizontalschwenkachse 17 liegt dabei in geschlossener Stellung des Daches 2 (Fig. 1) unterhalb und deutlich heckwärts des hinteren Dachteils 3. Die Schwenkachse 17 ist über zwei seitliche Ausleger 18,19, die als Schwenkarme dienen und starr an dem hinteren Dachteil 3 festgelegt sind, mit diesem verbunden. Die Ausleger 18,19 sind dabei den Fahrzeugaußenseiten zugeordnet und beispielsweise über Hydraulikzylinder oder andere Antriebsorgane 20,21 betätigbar. Auch eine rein manuelle Betätigung oder eine Unterstützung durch Gasdruckzylinder in der manuellen Betätigung ist möglich. Durch die seitliche Lage der Ausleger 18,19 können diese etwa hinter Verkleidungen angeordnet sein und daher das Kofferraumvolumen uneingeschränkt lassen.

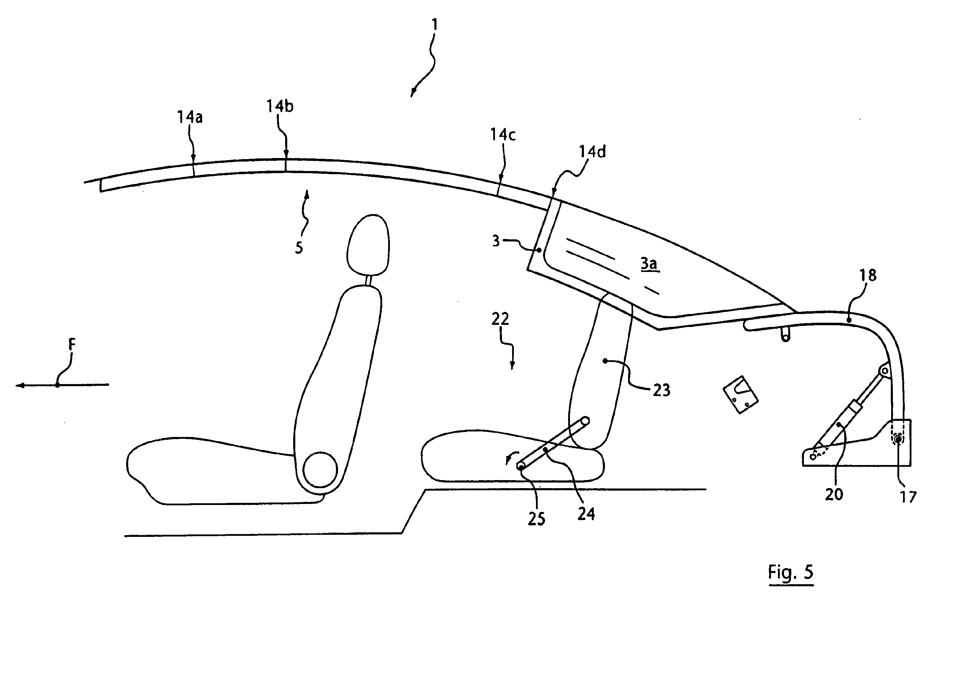

Das im Ausführungsbeispiel dargestellte Cabriolet-Fahrzeug 1 umfaßt des weiteren eine hintere Sitzreihe 22, deren Sitzlehnen 23 aus der hinteren Extremalstellung (Fig. 5) in Fahrtrichtung F verlagerbar sind. Hierzu dient beispielsweise ein Schwenkarm 24, der um ein karosseriefestes Gelenk 25 schwenkbar ist und dabei die Sitzlehne 23 nach vorne verlagert. Auch eine Kulissenführung oder dergleichen ist möglich. Die hintere Extremalstellung der Sitzlehnen 23 stellt die übliche Gebrauchsstellung der hinteren Sitzreihe 22 dar.

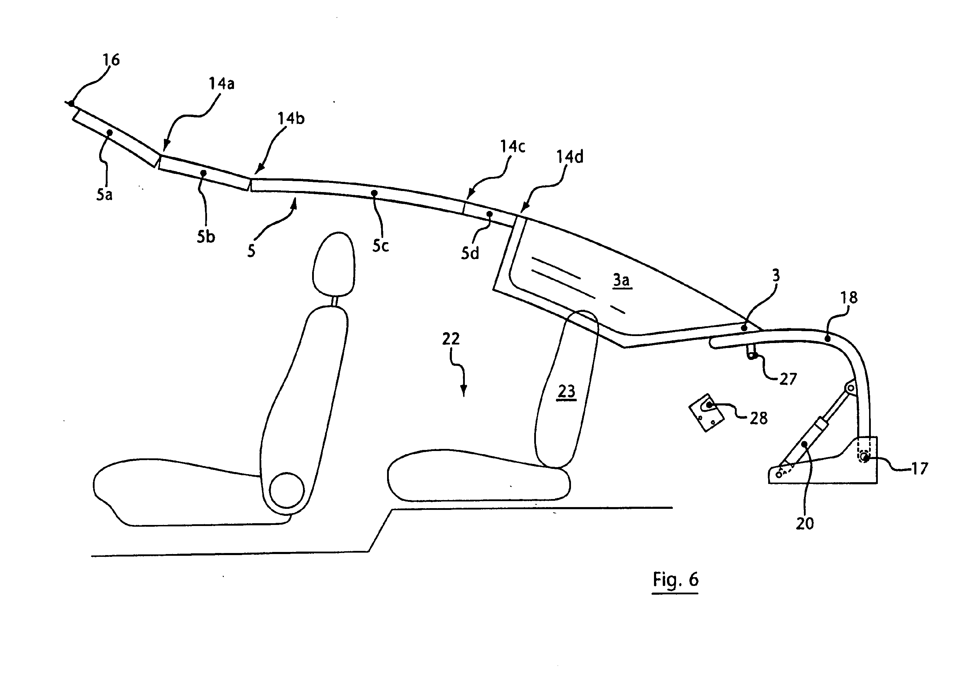

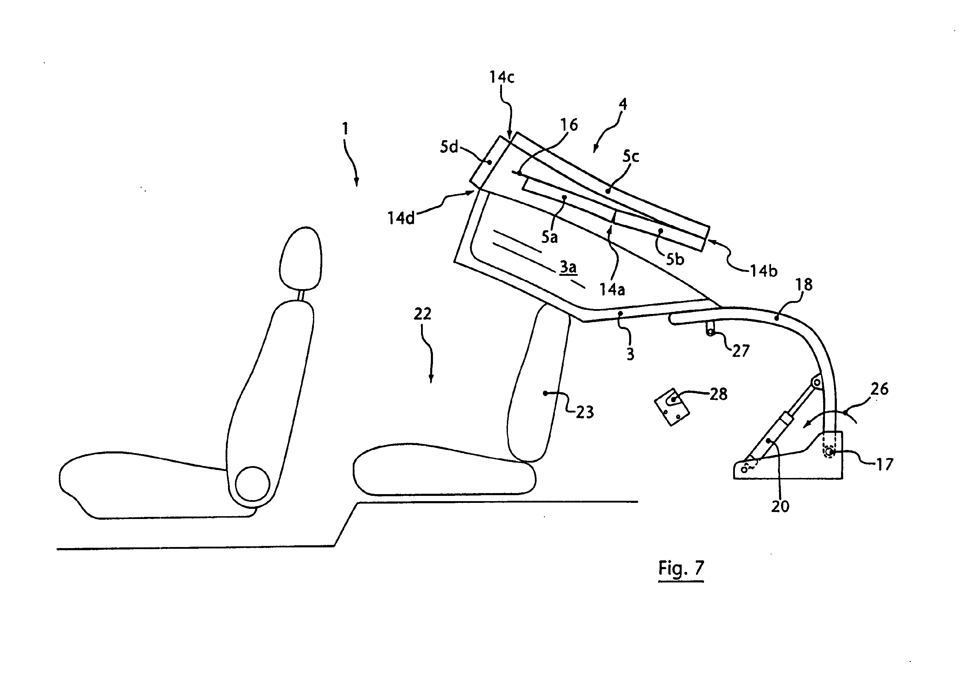

Zum Öffnen des Daches 2 wird zunächst der vordere Querträger 16 vom Windschutzscheibenrahmen 9 abgehoben. Dabei werden die Gelenke 12a,13a,14a,15a;12b,13b,14b,15b eingeknickt, so daß die dort vorher auf Stoß aneinanderliegenden Abschnitte 5a,5b,5c bzw. 6a,6b,6c der seitlichen Rahmenabstützungen 5,6 sowie 7a,7b,7c und 8a,8b,8c der Längsträger 7,8 gegeneinander abgewinkelt werden (Fig. 6). Die Abschnitte 5a,5b,6a,6b,7a,7b,8a,8b werden dann um nahezu 180° nach hinten aufgeschwenkt und auf den Abschnitten 5c,6c,7c,8c abgelegt (Fig. 2). Im weiteren wird zunächst das Gelenk 12c,13c,14c,15c eingeknickt, so daß die Bereiche 5c,6c,7c,8c über Durchschreiten einer vertikalen Stellung (Fig. 3) nach hinten abgelegt werden können, wobei die auf den Bereichen 5c,6c,7c,8c liegenden vorderen Abschnitte 5a,5b,6a,6b,7a,7b,8a,8b in einer Parallelstellung zu den Abschnitten 5c,6c,7c,8c verbleiben. Gleichzeitig wird schließlich auch das Gelenk 12d,13d,14d,15d eingeknickt, wodurch insgesamt nach Art eines Rolldaches der flexible Bereich 4 auf dem starren Dachteil 3 abgelegt wird (Fig. 7). Der Abschnitt 5d,6d,7d,8d steht dabei nahezu vertikal, während die anderen Abschnitte im wesentlichen parallel auf der Heckscheibe 3a aufliegen.

Durch Schwenkbewegung in Richtung des Pfeils 26 (Einziehen der Hydraulikzylinder 20,21 oder manueller Druck gegen die Kraft entsprechend angeordneter Gaszylinder) wird dann das hintere starre Dachteil 3 um die horizontale Schwenkachse 17 abwärtskerschwenkt, wobei wegen des großen Hebelarms um die Schwenkachse 17 nur eine geringe Kraft für ein hinreichendes Drehmoment sowohl beim Absenken als auch beim Anheben des starren Dachteils 3 mit dem darauf liegenden flexiblen Dachteil 4 aufgebracht werden muß.

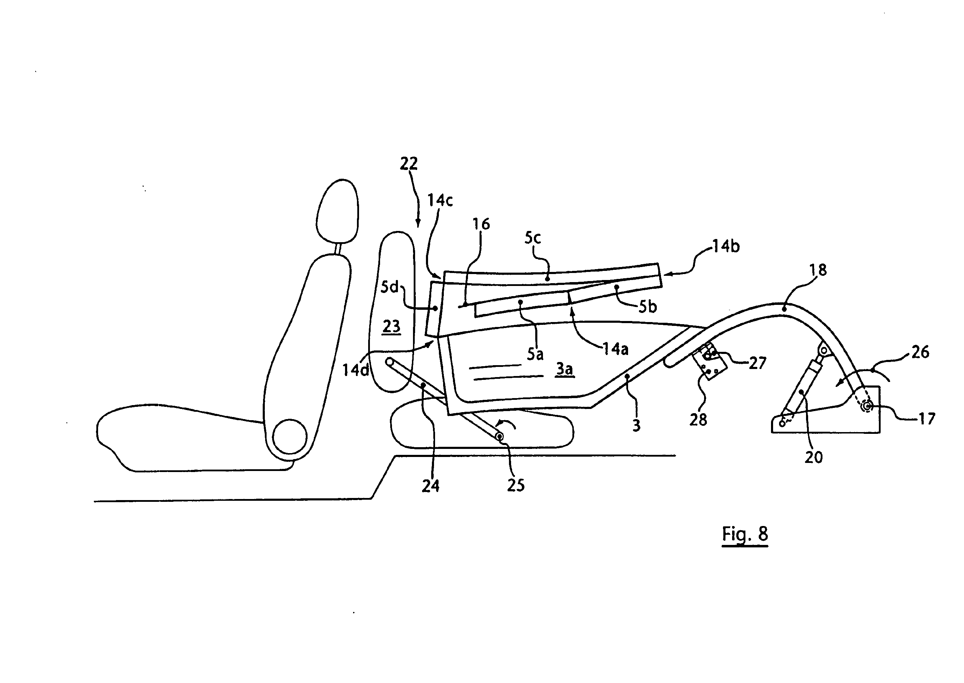

Um Raum für die Ablage des Daches 2 zu schaffen, wird zunächst die Lehne 23 der hinteren Sitzreihe 22 aus der hinteren Extremalstellung (Fig. 7) in die vordere Extremalstellung (Fig. 8) verlagert, so daß der Bereich 22 der hinteren Sitzreihe als Ablageraum für das geöffnete Dach 2 genutzt werden kann.

In Offenstellung (Fig. 8) ist das Dach über an den Auslegern 18,19 angeordnete Achsstummel 27 in Schlössern 28 verriegelbar.

Die Dachöffnung kann, um eine insgesamt kostengünstige Lösung zu erreichen, vollständig manuell erfolgen. Auch eine teilweise manuelle Öffnung, etwa des flexiblen Bereiches 4, und eine mechanisch unterstützte bzw. angetriebene Öffnung des starren Heckbereichs 3 des Daches 2 ist möglich.

Durch die heckseitige und abwärtsverlagerte Schwenkachse 17 sowie die seitlichen Ausleger 18,19 bleibt das Kofferraumvolumen nahezu vollständig erhalten. In Offenstellung ist die Heckscheibe 3a nahezu horizontal gehalten, so daß auch darunter noch Raum zur Aufnahme von Gepäckstücken verbleibt. Somit ist insgesamt eine bezüglich des Kofferraums sehr platzsparende und gleichzeitig preisgünstige Lösung für ein Cabriolet-Fahrzeug geschaffen.

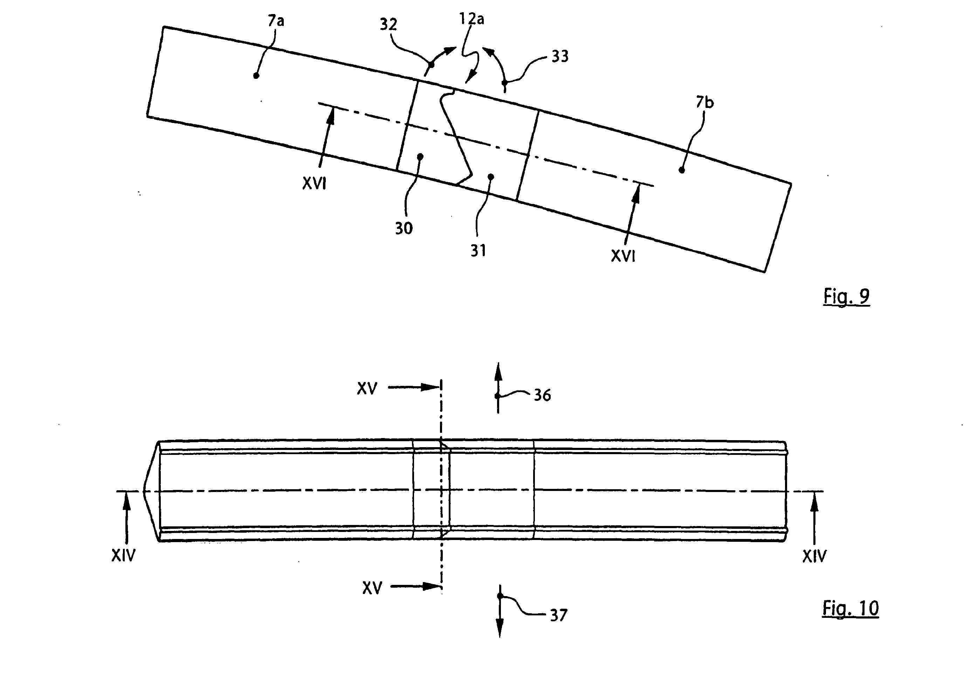

Die Längsträger 7,8 können wie die Seitenträger 5,6 beispielsweise aus einem Kunststoff, insbesondere einem mechanisch hochbelastbaren Kunststoff, wie etwa einem Duroplasten, etwa Polyurethan, bestehen. Die Träger 7,8 sowie die seitlichen Rahmenabstützungen 5,6 sind dabei im wesentlichen gleichartig ausgebildet und umfassen jeweils ein massives Profil, beispielsweise ein Dreiecksprofil (sh. Fig. 9, Fig. 10).

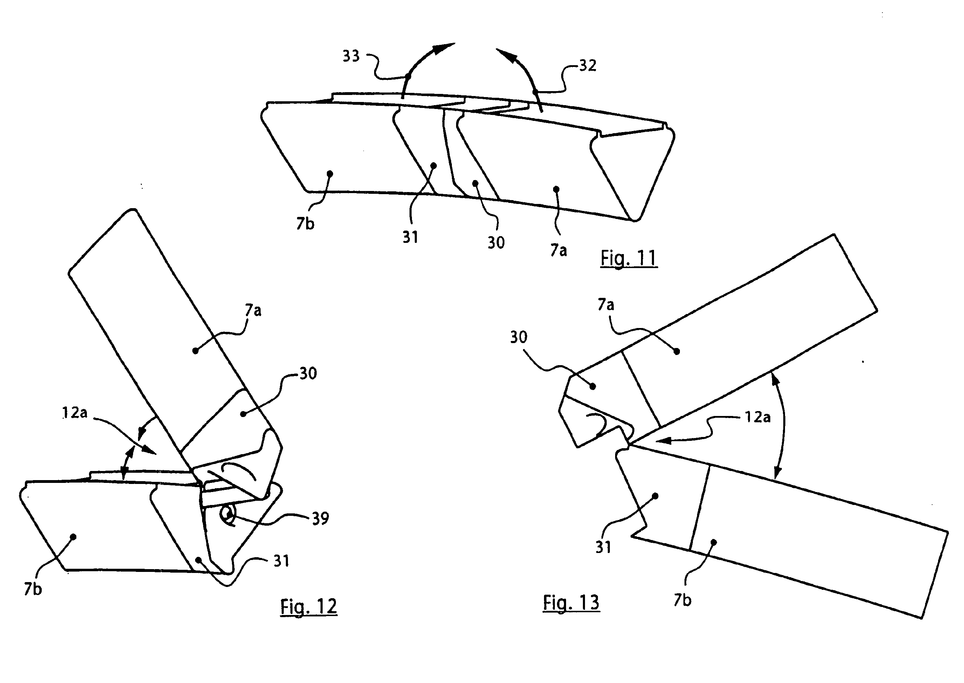

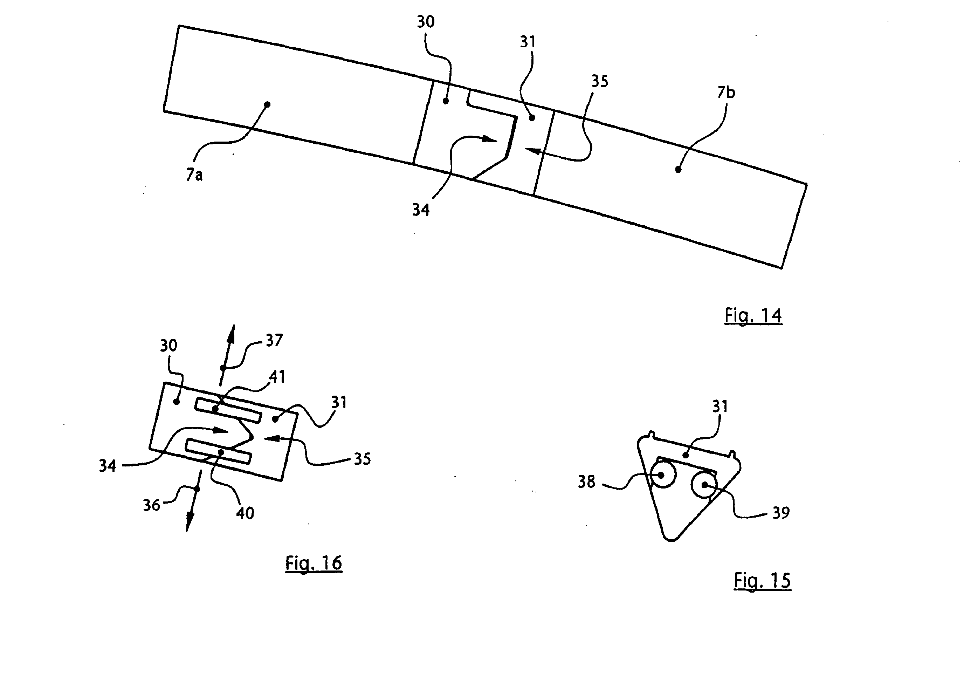

In den Gelenkbereichen 12a,13a,14a,15a,12b,13b,14b,15b,12c,13c,14c,15c weisen die Längsträger 7,8 sowie die äußeren Rahmenabstützungen 5,6 jeweils eine bei geschlossenem Dach einen formschlüssigen Eingriff der Teile sichernde Ausbildung auf, die in den Figuren 9 bis 16 für das Gelenk 12a beschrieben und mit den entsprechenden Bezugszeichen versehen ist. Die Ausbildung ist bei den anderen genannten Gelenken entsprechend.

Die Trägerteile 7a,7b, die am Gelenk 12a aneinanderstoßen, sind im Gelenkbereich jeweils mit Verbindunosstücken 30,31 versehen, wobei die Verbindungsstücke eine besonders große Härte und Verschleißfestigkeit aufweisen und beispielsweise aus einem Metall gebildet sind. Figur 9 zeigt eine Seitenansicht der Teile 7a,7b des Längsträgers 7, die in Richtung der Pfeile 32,33 nach oben hin gegeneinander öffnen können.

Um die formschlüssige Abstützung in alle Richtungen der Teile 30,31 sicherstellen zu können, sind diese über ihren Querschnittsverlauf nicht gleichmäßig ausgebildet, sondern zeigen, wie in dem Schnitt XVI-XVI sichtbar ist, als Grundausbildung eine herausragende Pfeilspitze 34 bzw. eine einwärts zeigende Pfeilspitze 35, wodurch auch Kräfte in Seitwärtsrichtung (Pfeile 36, 37) abgefangen werden können. Zudem sind im wesentlichen axiale Ausnehmungen 38,39 in dem Verbindungsstück 31 vorgesehen, in das entsprechende Stifte 40,41 des Verbindungsstücks 30 eingreifen und somit in Verbindungsstellung die Abschnitte 7a,7b in nahezu unverrückbarer Weise aneinander festlegen, wodurch die einzelnen Träger 7,8 bzw. die äußeren Rahmenabstützungen 5,6 insgesamt jeweils eine Starrheit nahezu wie bei durchgehenden, ungeteilten Trägern aufweisen. Diese Starrheit wird lediglich beim Einfalten um die jeweiligen Gelenkachsen durchbrochen.

Damit ist eine hohe mechanische Stabilität auch des flexiblen Dachbereiches 4 gesichert. Auch bei Überfahren von Fahrbahnunebenheiten ergeben sich keine Klappergeräusche oder Schwingungen der Teile gegeneinander.

Zur zusätzlichen Aussteifung können noch einzelne Querträger, etwa 10,11 zwischen Teilabschnitten, beispielsweise 7b und 8b bzw. 7c und 8c, angeordnet und jeweils an diesen Teilabschnitten 7b,8b,7c,8c festgelegt sein. Diese Querträger 10,11 laufen dann dicht unter der von dem Dachbezug bespannten Oberfläche und sind daher von außen nicht sichtbar.

Nach innen hin kann das flexible Dach bzw. der flexible Dachbereich 4 von einem sogenannten Innenhimmel untergriffen sein, so daß weder die Träger 7,8 noch die Querträger 10,11 oder die Rahmenabstützungen 5,6 vom Innenraum aus sichtbar sind.

## Patentansprüche

1. Cabriolet-Fahrzeug (1) mit einem im rückwärtigen Fahrzeugbereich ablegbaren Dach (2), wobei das Dach (2) zumindest in einem Teilbereich (4) flexibel ausgebildet ist und der flexible Dachbereich (4) einen über zumindest bereichsweise starre Träger (7;8) zwischen fahrzeugrandseitigen Rahmenabstützungen (5;6) gespannten Dachbezug aufweist, **dadurch gekennzeichnet, daß** zumindest ein Teil der Träger (7;8) in Fahrzeuglängsrichtung verläuft.

2. Cabriolet-Fahrzeug nach Anspruch 1, **dadurch gekennzeichnet, daß** die längsverlaufenden Träger (7;8) jeweils zumindest ein Gelenk (12a,12b,12c; 13a,13b,13c) umfassen und das Dach (2) oder der flexible Dachbereich (4) um diese Gelenke (12a,12b,12c;13a,13b,13c) faltbar ist.

3. Cabriolet-Fahrzeug nach Anspruch 2, **dadurch gekennzeichnet, daß** die längsverlaufenden Träger (7;8) jeweils mehrere Gelenke (12a,12b,12c;13a, 13b,13c) umfassen und das Dach (2) oder der flexible Dachbereich (4) um diese Gelenke (12a,12b,12c;13a,13b,13c) nach Art eines Rolldachs faltbar ist.

4. Cabriolet-Fahrzeug nach einem der Ansprüche 1 bis 3, **dadurch gekennzeichnet daß** das Cabriolet-Fahrzeug (1) ein starres rückwärtiges Dachteil (3), das eine Heckscheibe (3a) umfaßt, aufweist und der flexible Teilbereich (4) sich in Fahrtrichtung (F) vorgeordnet an das rückwärtige Dachteil (3) anschließt.

5. Cabriolet-Fahrzeug nach einem der Ansprüche 1 bis 4, **dadurch gekennzeichnet daß** das rückwärtige Dachteil (3) und der flexible Dachbereich (4) von einem gemeinsamen Bezug übergriffen sind.

6. Cabriolet-Fahrzeug nach einem der Ansprüche 4 oder 5, **dadurch gekennzeichnet, daß** zur Öffnung des Daches (2) das flexible Dachteil (4) auf dem rückwärtigen Dachteil (3) ablegbar ist und dieses mit dem darauf abgelegten flexiblen Dachteil (4) gemeinsam um eine rückwärtige Schwenkachse (17) zur Öffnung des Daches abwärts verschwenkbar ist.

7. Cabriolet-Fahrzeug nach einem der Ansprüche 1 bis 6, **dadurch gekennzeichnet, daß** zumindest der Einfaltprozeß des flexiblen Dachbereichs (4) manuell vornehmbar ist.

8. Cabriolet-Fahrzeug nach einem der Ansprüche 1 bis 7, **dadurch gekennzeichnet, daß** das Cabriolet-Fahrzeug (1) eine rückwärtige Sitzreihe (22) aufweist und in Offenstellung des Daches (2) dieses im Bereich der rückwärtigen Sitzreihe (22) abgelegt ist.

9. Cabriolet-Fahrzeug nach Anspruch 8, **dadurch gekennzeichnet, daß** die Sitzlehne(n) (23) der rückwärtigen Sitzreihe (22) in Fahrzeuglängsrichtung verlagerbar ist oder sind und sich in geschlossener Stellung des Daches in einer hinteren und in geöffneter Stellung des Daches in einer vorderen Extremalstellung befindet oder befinden.

## Claims

1. A cabriolet vehicle (1) having a roof (2) which can be stored in the rear vehicle area, whereby the roof (2) is flexibly formed in at least one portion (4) and the flexible roof area (4) has a roof covering which is stretched over brackets (7; 8), which are rigid in at least some areas, between frame supports (5; 6) at the vehicle edge side, **characterised in that** at least one part of the brackets (7; 8) runs in the longitudinal direction of the vehicle.

2. The cabriolet vehicle according to Claim 1, **characterised in that** the brackets (7; 8) running longitudinally each include at least one hinge (12a, 12b, 12c; 13a, 13b, 13c) and the roof (2) or the flexible roof area (4) is able to be folded around these hinges (12a, 12b, 12c; 13a, 13b, 13c).

3. The cabriolet vehicle according to Claim 2, **characterised in that** the brackets (7; 8) running longitudinally each include several hinges (12a, 12b, 12c; 13a, 13b, 13c) and the roof (2) or the flexible roof area (4) is able to be folded around these hinges (12a, 12b, 12c; 13a, 13b, 13c) in the manner of a roller roof.

4. The cabriolet vehicle according to one of Claims 1 to 3, **characterised in that** the cabriolet vehicle (1) has a rigid rear roof part (3), which includes a back window (3a), and the flexible portion (4) is connected to the rear roof part (3), arranged ahead in the direction of travel (F).

5. The cabriolet vehicle according to one of Claims 1 to 4, **characterised in that** the rear roof part (3) and the flexible roof area (4) are overlaid by a common cover.

6. The cabriolet vehicle according to one of Claims 4 or 5,
**characterised in that**, in order to open the roof (2), the flexible roof part (4) is able to be stored on the rear roof part (3), and this, with the flexible roof part (4) stored upon it, is commonly downwardly pivotable around a rear pivot axis (17), in order to open the roof.

7. The cabriolet vehicle according to one of Claims 1 to 6, **characterised in that** at least the folding-in process for the flexible roof area (4) is able to be carried out manually.

8. The cabriolet vehicle according to one of Claims 1 to 7, **characterised in that** the cabriolet vehicle (1) has a rear seat row (22) and **in that**, when the roof (2) is in the opened position, it is stored in the area of the rear seat row (22).

9. The cabriolet vehicle according to Claim 8, **characterised in that the** seat backrest(s) (23) of the rear seat row (22) is or are able to be shifted in the longitudinal direction of the vehicle and, in the closed position of the roof, is or are located in a back extremal position and, in the open position of the roof, is or are located in a front extremal position.

## Revendications

1. Véhicule cabriolet (1) ayant un toit (2) qui peut se ranger dans la zone arrière d'un véhicule, le toit (2) étant formé de façon flexible dans au moins une section (4) et la zone de toit flexible (4) présentant un revêtement de toit tendu sur des supports (7 ; 8) rigides dans au moins des zones entre des appuis formant cadres (5 ; 6) au niveau de bords latéraux du véhicule, **caractérisé en ce qu'**au moins une partie des supports (7 ; 8) se prolonge dans le sens de la longueur du véhicule.

2. Véhicule cabriolet selon la revendication 1, **caractérisé en ce que** les supports (7 ; 8) qui se prolongent longitudinalement comprennent chacun au moins une articulation (12a, 12b, 12c ; 13a, 13b, 13c) et le toit (2) ou la zone de toit flexible (4) est pliable autour de ces articulations (12a, 12b, 12c ; 13a, 13b, 13c).

3. Véhicule cabriolet selon la revendication 2, **caractérisé en ce que** les supports (7 ; 8) qui se prolongent longitudinalement comprennent chacun plusieurs articulations (12a, 12b, 12c ; 13a, 13b, 13c) et le toit (2) ou la zone de toit flexible (4) est pliable autour de ces articulations (12a, 12b, 12c ; 13a, 13b, 13c) à la façon d'un toit roulant.

4. Véhicule cabriolet selon l'une des revendications 1 à 3, **caractérisé en ce que** le véhicule cabriolet (1) présente une partie formant toit arrière (3) rigide, laquelle comprend une lunette arrière (3a), et la section flexible (4) se raccorde à la partie formant toit arrière (3) dans le sens de la conduite (F) de façon pré-arrangée.

5. Véhicule cabriolet selon l'une des revendications 1 à 4, **caractérisé en ce que** la partie formant toit arrière (3) et la zone de toit flexible (4) sont recouvertes par un même revêtement.

6. Véhicule cabriolet selon l'une des revendications 4 ou 5, **caractérisé en ce que**, afin d'ouvrir le toit (2), la zone de toit flexible (4) peut se ranger sur la zone de toit arrière (3) et celle-ci peut pivoter conjointement avec la zone de toit flexible (4) rangée sur celle-ci autour d'un axe de pivotement (17) arrière afin d'ouvrir le toit vers le bas.

7. Véhicule cabriolet selon l'une des revendications 1 à 6, **caractérisé en ce qu'**au moins le procédé de repliage de la zone de toit flexible (4) peut être effectué manuellement.

8. Véhicule cabriolet selon l'une des revendications 1 à 7, **caractérisé en ce que** le véhicule cabriolet (1) présente une rangée de sièges arrière (22) et, en position d'ouverture du toit (2), celui-ci est rangé dans la zone de la rangée de sièges arrière (22).

9. Véhicule cabriolet selon la revendication 8, **caractérisé en ce que** le ou les dossiers de sièges (23) de la rangée de sièges arrière (22) peut ou peuvent être déplacés dans le sens de la longueur du véhicule et se trouve ou se trouvent dans une position extrême arrière en position fermée du toit et dans une position extrême avant en position ouverte du toit.
